# EUROPÄISCHE PATENTSCHRIFT

(11) **EP 1 643 151 B1**
(45) Veröffentlichungstag und Bekanntmachung des Hinweises auf die Patenterteilung: **16.05.2007**
(21) Anmeldenummer: 04023440.3
(22) Anmeldetag: 01.10.2004
(51) Int. Cl.: F16D 65/12, F16D 66/00

(54) **Carbon-Keramik-Bremsscheibe mit Belastungsanzeige**
Carbon-ceramic brake disk with load indicator
Frein à disque en carbone-céramique avec indication de charge

(43) Veröffentlichungstag der Anmeldung: 05.04.2006
(73) Patentinhaber: AUDI AG, 85045 Ingolstadt (DE)
(72) Erfinder: Kienzle, Andreas, Dr., 86753 Möttingen OT Balgheim (DE); Krätschmer, Ingrid, 86485 Biberbach (DE); Wüllner, Andreas, 80992 München (DE)
(74) Vertreter: Deckers, Hellmuth Alexander

(56) Entgegenhaltungen:
- EP-A- 1 251 289
- DE-A1- 10 116 659
- US-A1- 2003 021 975

## Beschreibung

Die Erfindung betrifft eine Carbon-Keramik-Bremsscheibe mit Belastungsanzeige.

Carbon-Keramik-Bremsscheiben zeichnen sich gegenüber Bremsscheiben aus Metall unter anderem durch niedrigeren Verschleiß und höhere Verzögerungsleistung aus. Generell ist jedoch keramischen Werkstoffen eigen, daß sie ab einem kritischen Verschleißzustand zu katastrophalem Versagen neigen. Daher ist es wünschenswert, über den Verschleißzustand von Carbon-Keramik-Bremsscheiben auf einfache Weise zuverlässige Aussagen machen zu können.

Aus der Patentliteratur sind bereits einige Möglichkeiten bekannt, den Verschleißzustand von Carbon-Keramik-Bremsscheiben anzuzeigen. So ist beispielsweise aus der EP-A 1251289 bekannt, in die Reibfläche "Indikator-Körper" aus einem Material einzubringen, das oxydativ schneller geschädigt wird als der Keramik-Körper, wodurch die Schädigung der Indikator-Körper der des Keramik-Körpers der Bremsscheibe vorauseilt. Hat dieser Indikator-Körper einen bestimmten Verschleißzustand erreicht, so kann daraus auf die Gesamtbelastung der Bremsscheibe geschlossen werden und diese gegebenenfalls ausgetauscht werden, bevor an ihr Schäden auftreten. Derartige Indikatoren können rein visuelle Signale geben, beispielsweise durch Ersatz eines Teils der Reibfläche durch ein schneller verschleißendes Material, oder mechanisch spürbare Signale, wobei im Inneren der Bremsscheibe ein Teil aus einem oxydierbaren Material ausgeführt wird, das durch die thermische Belastung zerstört wird und durch den Wegfall zumindest eines Teils seiner Masse eine Unwucht in der Carbon-Keramik-Bremsscheibe bewirkt, die sich im Fahrverhalten bemerkbar macht.

Ein Nachteil von diesen bekannten visuellen Indikatoren ist, daß sie so klein ausgeführt werden müssen, daß sie nicht die Größe der übrigen Reibfläche übermäßig beeinträchtigen; andererseits müssen sie genügend groß sein, daß sie ein auffälliges sichtbares Signal ergeben.

Es besteht daher die Aufgabe, eine Carbon-Keramik-Bremsscheibe mit einer Belastungsanzeige bereitzustellen, wobei diese eine auffällige sichtbare Veränderung der zugänglichen Oberfläche bewirken soll, aber andererseits die als Reibschicht wirksame Fläche solange nicht beeinträchtigt, wie noch kein Signal bezüglich des Erreichens eines vorwählbaren Belastungszustands gegeben werden soll.

Diese Aufgabe wird gelöst, indem ein räumlich begrenzter Bereich der Reibschicht so modifiziert wird, daß der sich bei Betrieb der Carbon-Keramik-Bremsscheibe auf der Oberfläche der Reibschicht ausbildende Tribofilm ab einem vorgegebenen Belastungszustand nicht mehr auf der Oberfläche der Carbon-Keramik-Bremsscheibe haftet und flächig abplatzt.

Dabei wird als Reibschicht die obere und untere Deckschicht des zylinderringförmigen Körpers der Carbon-Keramik-Bremsscheibe bezeichnet.

Die Erfindung betrifft daher eine Carbon-Keramik-Bremsscheibe C, deren Werkstoff ein mit Verstärkungsfasern, bevorzugt mit Fasern aus Kohlenstoff, verstärktes keramisches Material ist, mit mindestens einer Reibschicht, deren den Bremsbelägen zugewandte Fläche mindestens einen als Indikatorfläche bezeichneten räumlich begrenzten Bereich der Reibfläche umfaßt, der eine von seinem thermischen und mechanischen Verschleißzustand abhängige Haftung zu dem sich auf der Reibfläche der Carbon-Keramik-Bremsscheibe ausbildenden Tribofilm aufweist, dadurch gekennzeichnet, daß der Tribofilm auf der Indikatorfläche ab einem durch die Wahl der Werkstoffzusammensetzung in diesem Bereich einstellbaren Verschleißzustand nicht mehr haftet.

Die Erfindung betrifft weiter ein Verfahren zur Herstellung einer Carbon-Keramik-Bremsscheibe C, bei dem
- im ersten Schritt ein poröser Kohlenstoffkörper B hergestellt wird durch Erhitzen eines Körpers A aus einem mit Verstärkungsfasern bevorzugt aus Kohlenstoff verstärkten carbonisierbaren Material, wobei dieser Körper eine Form aufweist, die unter Berücksichtigung der geringen Volumenänderungen bei den nachfolgenden Schritten der der Carbon-Keramik-Bremsscheibe entspricht (auf englisch als "near net shape" bezeichnet),
- im zweiten Schritt durch Infiltration des im ersten Schritt hergestellten porösen, mit Verstärkungsfasern, bevorzugt mit Fasern aus Kohlenstoff, verstärkten Kohlenstoffkörpers B mit flüssigem Silicium und nachfolgende Reaktion mit dem Silicium zumindest ein Teil des Kohlenstoffs zu Siliciumcarbid umgewandelt wird, unter Bildung eines Körpers C,
wobei das carbonisierbare Material des Körpers A Verstärkungsfasern bevorzugt aus Kohlenstoff und ein plastisches Bindemittel enthält, und in einem der Indikatorfläche entsprechenden räumlich begrenzten Bereich eine Zusammensetzung aufweist, die sich von der Zusammensetzung des carbonisierbaren Materials für die übrige Reibschicht unterscheidet durch
- einen Massenanteil von mindestens 10 % an Pech in dem carbonisierbaren Material, oder
- einen Gehalt an Verstärkungsfasern, von denen ein Massenanteil von weniger als 10 % durch ein Sieb mit der Maschenweite von 0,5 mm passiert.

Dieser räumlich begrenzte Bereich der Reibschicht einer so hergestellten Carbon-Keramik-Bremsscheibe weist die unerwartete Eigenschaft auf, daß sich bei einem Belastungszustand, der durch Wahl von Art und Anteil des zusätzlich verwendeten Pechs in der Mischung frei einstellbar ist, der in diesem Bereich gebildete Tribofilm sich von der Oberfläche der Reibschicht der Bremsscheibe löst und flächig abplatzt. Der Bereich, in welchem der Tribofilm von der Oberfläche der Bremsscheibe abgeplatzt ist, ist deutlich und einfach zu sehen.

In einer bevorzugten Ausführungsform beträgt die Indikatorfläche maximal 15 % der Reibfläche der Carbon-Keramik-Bremsscheibe. In einer weiteren bevorzugten Ausführungsform ist die Indikatorfläche mindestens ein Kreissektor mit einem Öffnungswinkel von mindestens 5°.

In einer Carbon-Keramik-Bremsscheibe gemäß der vorliegenden Erfindung unterscheidet sich die Zusammensetzung der Matrix des als Indikatorfläche wirkenden räumlich begrenzten Bereichs ("Indikator-Bereich") von der Zusammensetzung der Matrix der restlichen Reibschicht. Dies ist im Fall einer C/SiC-Keramik dadurch zu realisieren, daß die Matrix der Werkstoffe der Reibschicht und des Indikator-Bereichs Siliciumcarbid und Silicium enthalten, wobei der Massenanteil an Siliciumcarbid der Matrix des Indikator-Bereichs höchstens das 0,9-fache des Massenanteils an Siliciumcarbid der restlichen Reibschicht beträgt. Eine derartige Begrenzung des Massenanteils an Siliciumcarbid läßt sich in einer bevorzugten Ausführungsform erreichen, indem das für die Erzeugung der Indikatorbereiche eingesetzte carbonisierbare Material einen Massenanteil an Pech von mindestens 10 %, bevorzugt mindestens 15 % aufweist.

In einer weiteren Ausführungsform von Carbon-Keramik-Bremsscheiben mit beliebigen keramischen Matrix-Materialien ist es möglich, daß sich in dem als Indikatorfläche wirkenden räumlich begrenzten Bereich der Faseranteil von dem im restlichen Bereich des die Reibfläche bildenden Werkstoffs des Körpers A dadurch unterscheidet, daß der Werkstoff des Körpers A in dem Indikator-Bereich Verstärkungsfasern aus Kohlenstoff enthält, von denen ein Massenanteil von weniger als 10 % einer Siebfraktion enthält, die durch ein Sieb mit der Maschenweite von 0,5 mm passiert.

Als Reibfläche wird die den Bremsbelägen zugewandte Oberfläche der Carbon-Keramik-Bremsscheibe bezeichnet.

Die erfindungemäßen Indikatorbereiche lassen sich in einer Carbon-Keramik-Bremsscheibe realisieren, indem
- in einer bevorzugten Ausführungsform vorgefertigte Indikatorelemente während des Fertigungsprozesses für solche Bremsscheiben, die in mehrteiliger Bauweise aus einem Tragkörper und zwei Reibschichten hergestellt werden, in die Preßform für die Bremsscheibe auf den Tragkörper eingelegt werden, rundherum wird die preßbare Masse für die Reibschicht des Körpers A eingefüllt und es wird gemeinsam gepreßt und gehärtet,
- oder in einer anderen bevorzugten Ausführungsform während des Befüllens der Preßform mit der die Reibschicht ergebenden Masse eine die Indikatorbereiche ergebende Masse in räumlich begrenzte Bezirke eingebracht wird,
- beim Befüllen der Preßform ein Platzhalter an die für den Indikator vorgesehenen Stelle eingebracht wird, nach dem Pressen der Platzhalter entfernt wird und das Indikatorelement als vorgepreßtes Element oder als preßbare Masse eingebracht wird, wobei im letzteren Fall erneutes Pressen erforderlich ist.

Als Indikatorelement wird ein Körper bezeichnet, der die gewünschte Form, bevorzugt eine Zylinderform, aufweist, und der aus einer preßbaren Masse (hier als "Indikatormasse" bezeichnet) hergestellt werden kann, die einen Massenanteil von mindestens 10 % an Pech enthält, oder, in einer anderen Ausführungsform, Verstärkungsfasern aus Kohlenstoff enthält, von denen ein Massenanteil von weniger als 10 % einer Siebfraktion enthält, die durch ein Sieb mit der Maschenweite von 0,5 mm passiert.

Für die weitere Fertigung der Bremsscheibe wird in einer Ausführungsform die in die Preßform eingefüllte Masse für die Reibschichten mit dem Tragkörper gemeinsam gehärtet, unter Ausschluß von oxydierenden Gasen carbonisiert und anschließend mit flüssigem Silicium infiltriert, wobei ein Teil des beim Carbonisieren gebildeten porösen Kohlenstoffs zu Siliciumcarbid reagiert.

Die Reibschichtringe werden in einer anderen Ausführungsform separat gepreßt, wobei vor dem Pressen Platzhalter an den für die Indikatorelemente vorgesehenen Stellen eingesetzt werden, oder nach dem Pressen an den vorgesehenen Stellen eine passende Bohrung eingebracht wird, und diese Reibschicht wird nach Einfügen von den vorgefertigten Indikatorelementen auf den Tragkörper geklebt oder beim Pressen des Tragkörpers mitgepreßt.

Wird ein vorgefertigtes Indikatorelement verwendet, so kann es jeweils im Grünzustand (in nicht carbonisierter Form, also als CFK-Teil, oder weniger bevorzugt in bereits carbonisierter Form, also als C/C-Teil) in den mit passenden Aussparungen versehenen Reibring eingesetzt und gegebenenfalls verklebt werden.

Je nach der Zusammensetzung der preßbaren Masse für die Indikatorbereiche kann der Belastungszustand, bei dem die Ablösung des Tribofilms eintritt, variiert werden. Dies ermöglicht eine einstellbare Belastungsanzeige und damit ein Signal für einen fälligen Bauteilwechsel im Bremssystem.

Die Erfindung wird durch die nachfolgenden Beispiele erläutert.

### Beispiele

### Beispiel 1 Herstellung der Mischung für die Indikator-Bereiche ("Indikatormasse") für 140 Fadings

In einem Intensiv-Mischer (Mischvolumen 150 1; Fa. Eirich, Hartheim) wurden 10,3 kg Kohlenstoffasern (Kabel mit 410 000 Einzelfilamenten, gemahlen, mit einer mittleren Länge, die einer Siebfraktion von 0,5 mm bis 1 mm entspricht) vorgelegt. 7 kg eines Novolakharzes (®Norsophen PF N 1203) wurden zugegeben, es wurde bei einer Drehzahl von 400 min⁻¹ ca. zwei Minuten gemischt. Dann wurden 1,7 kg eines Pechs (®Carbores) und 1 kg eines weiteren Phenolharzes (® SSP 0277, Fa. Bakelite GmbH, Iserlohn) zugefügt. Die Mischung wurde erneut bei 400 min⁻¹ ca. drei Minuten gemischt; sodann wurde der Mischer entleert.

### Beispiel 2 Herstellung der Mischung für den Tragkörper

Es wurde eine Mischung von 20 kg aus den Faserfraktionen der Länge 1 mm bis 2 mm, 2 mm bis 4 mm und 0,01 mm bis 0,5 mm und 0,5 mm bis 1 mm (Massenanteile: 35 %, 35 %, 20 % und 10 %, beschichtet gemäß dem Ausführungsbeispiel der DE-A 197 10 105) mit 10,3 kg des Novolakharzes wie in Beispiel 1 in einem Intensiv-Mischer (Mischvolumen 150 1; Fa. Eirich, Hartheim) vorgelegt. Es wurde bei einer Drehzahl von 400 min⁻¹ ca. zwei Minuten gemischt. Dann wurden 3,0 kg eines Pechs (®Carbores 12-101141 /2) zugefügt. Die Mischung wurde erneut bei 400 min⁻¹ ca. drei Minuten gemischt; sodann wurde der Mischer entleert.

### Beispiel 3 Herstellung der Mischung für die Reibschicht

Es wurde eine Mischung von 14,0 kg aus den Faserfraktionen der Länge 0,01 mm bis 0,5 mm und 0,5 mm bis 1 mm (Massenanteile: 50 % und 50 %, beschichtet gemäß dem Ausführungsbeispiel der DE-A 197 10 105) mit 6 kg eines Phenolharzes (® SSP 0277, Fa. Bakelite GmbH, Iserlohn) wie in Beispiel 1 in einem Intensiv-Mischer (Mischvolumen 150 1; Fa. Eirich, Hartheim) vorgelegt und nach Zugabe von 6 kg einer wäßrigen Lösung von Polyvinylalkohol (®Mowiol 4-88, Viskosität einer 4 %igen Lösung in Wasser bei 20 °C: 4 mPa·s, Hydrolysegrad ca. 88 cmol/mol; Kuraray Specialties Europe GmbH) bei einer Drehzahl von 1600 min⁻¹ ca. vier Minuten granuliert. Sodann wurde der Mischer entleert und das Granulat getrocknet.

### Beispiel 4 Indikator für 80 Fadings

In einem Intensiv-Mischer (Mischvolumen 150 1; Fa. Eirich, Hartheim) wurden 10,3 kg Kohlenstoffasern (Kabel mit 410 000 Einzelfilamenten, gemahlen, mit einer mittleren Länge, die einer Siebfraktion von 0,5 mm bis 1 mm entspricht) vorgelegt. 6 kg eines Novolakharzes (®Norsophen PF N 1203) wurden zugegeben, es wurde bei einer Drehzahl von 400 min⁻¹ ca. zwei Minuten gemischt. Dann wurden 3,4 kg eines Pechs (®Carbores) und 0,3 kg eines weiteren Phenolharzes (® SSP 0277, Fa. Bakelite GmbH, Iserlohn) zugefügt. Die Mischung wurde erneut bei 400 min⁻¹ ca. drei Minuten gemischt; sodann wurde der Mischer entleert.

### Beispiel 5 Tragkörper

Mit der Mischung aus Beispiel 2 wurde ein zylinderringförmiger Tragkörper für eine Bremsscheibe mit einer Dicke von 50 mm und einem inneren Umfang von 150 mm und einem äußeren Umfang von 350 mm gepreßt und bei 150 °C während 30 min bei einem Druck von 1,5 MPa in einer Warmfließpresse (Fa. Joos, Pfalzgrafenweiler) gepreßt und ausgehärtet.

### Beispiel 6 Reibkörper

Mit der Mischung aus Beispiel 3 wurden zylinderringförmige Reibringe für eine Bremsscheibe mit einer Dicke von 3 mm und einem inneren Umfang von 150 mm und einem äußeren Umfang von 350 mm gepreßt und durch Temperaturerhöhung wie in Beispiel 5 gehärtet.

### Beispiel 7 Indikatormaterial

Mit den Mischungen aus Beispiel 1 und Beispiel 4 wurde jeweils eine Kreisscheibe mit einer Dicke von 4 mm und einem Umfang von 200 mm gepreßt und durch Temperaturerhöhung wie in Beispiel 5 gehärtet.

### Beispiel 8

Zwei Tragkörper gemäß Beispiel 5, vier Reibkörper gemäß Beispiel 6 und zwei Indikatorscheiben gemäß Beispiel 7 (Mischung 1 und Mischung 4) wurden unter Ausschluß von oxydierenden Gasen separat bei 980 °C zu C/C-Körpern carbonisiert.

In diesen Reibkörpern wurden jeweils 6 gleichmäßig über den Umfang verteilte Bohrungen mit einem Durchmesser von 25 mm eingebracht. Passend ausgefräste Zylinderscheibchen aus den Indikatormaterial-Scheiben (jeweils zwei Reibkörper mit Indikatormaterial-Scheiben aus den Mischungen 1 und 4) wurden in die Bohrungen eingesetzt und eingeklebt. Diese Reibkörper wurden paarweise von beiden Seiten auf jeweils einen Tragkörper geklebt, die so zusammengesetzten Bremsscheiben wurden in einem Vakuumofen auf 1550 °C erhitzt und bei einem Druck von ca. 5 hPa mit flüssigem Silicium infiltriert.

Nach Schleifen der Oberflächen der durch die Reibkörper gebildeten Reibschichten der Carbon-Keramik-Bremsscheiben wurden diese jeweils auf einen Stahltopf montiert.

Die so hergestellten Carbon-Keramik-Bremsscheiben wurde im Vergleich mit einer ansonsten gleich hergestellten Carbon-Keramik-Bremsscheibe getestet, bei der jedoch die Reibschicht ausschließlich aus der Mischung gemäß Beispiel 3 hergestellt war.

Bei einer Belastung von 140 Fadings zeigte sich bei der Carbon-Keramik-Bremsscheibe mit Indikatorelementen aus der Mischung gemäß Beispiel 1 ein flächiges Abplatzen der Tribofilm-Schicht, während der Vergleichskörper keine oberflächliche Veränderung zeigte.

Bei der Carbon-Keramik-Bremsscheibe mit Indikatorelementen aus der Mischung gemäß Beispiel 4 zeigte sich bereits nach 80 Fadings ein Abplatzen des Tribofilms.

Es ist also erfindungsgemäß möglich, durch die Wahl der Zusammensetzung der Mischung für die Indikatorelemente den Belastungszustand, ab dem ein Abplatzen des Tribofilms auftritt, gezielt einzustellen.

## Patentansprüche

1. Carbon-Keramik-Bremsscheibe C, deren Werkstoff ein mit Fasern bevorzugt aus Kohlenstoff verstärktes keramisches Material ist, mit mindestens einer Reibschicht, in deren den Bremsbelägen zugewandter Fläche mindestens eine Indikatorfläche enthalten ist, die eine von dem thermischen und mechanischen Verschleißzustand abhängige Haftung zu dem sich auf der Reibfläche der Carbon-Keramik-Bremsscheibe ausbildenden Tribofilm aufweist, **dadurch gekennzeichnet, daß** der Tribofilm auf der Indikatorfläche ab einem durch die Wahl der Werkstoffzusammensetzung in diesem Bereich einstellbaren Verschleißzustand nicht mehr haftet.

2. Carbon-Keramik-Bremsscheibe C nach Anspruch 1, **dadurch gekennzeichnet, daß** die Indikatorfläche maximal 15 % der Reibfläche der Carbon-Keramik-Bremsscheibe beträgt.

3. Carbon-Keramik-Bremsscheibe C nach Anspruch 1, **dadurch gekennzeichnet, daß** die Indikatorfläche mindestens ein Kreissektor ist mit einem Öffnungswinkel von mindestens 5°.

4. Carbon-Keramik-Bremsscheibe C nach Anspruch 1, **dadurch gekennzeichnet, daß** die Matrix der Werkstoffe der Reibschicht und des Indikator-Bereichs Siliciumcarbid und Silicium enthalten, wobei der Massenanteil an Siliciumcarbid der Matrix des Indikator-Bereichs höchstens das 0,9-fache des Massenanteils an Siliciumcarbid der restlichen Reibschicht beträgt.

5. Carbon-Keramik-Bremsscheibe C nach Anspruch 4, **dadurch gekennzeichnet, daß** zur Begrenzung des Massenanteils an Siliciumcarbid das für die Erzeugung der Indikatorbereiche eingesetzte carbonisierbare Material einen Massenanteil an Pech von mindestens 10 % aufweist.

6. Carbon-Keramik-Bremsscheibe C nach Anspruch 1, **dadurch gekennzeichnet, daß** in den als Indikatorfläche wirkenden räumlich begrenzten Bereichen die Verstärkungsfasern aus Kohlenstoff einen Massenanteil von weniger als 10 % einer Siebfraktion enthalten, die durch ein Sieb mit der Maschenweite von 0,5 mm passiert.

7. Verfahren zur Herstellung einer Carbon-Keramik-Bremsscheibe C gemäß Anspruch 1, bei dem
- im ersten Schritt ein poröser Kohlenstoffkörper B hergestellt wird durch Erhitzen eines Körpers A aus einem mit Fasern bevorzugt aus Kohlenstoff verstärkten carbonisierbaren Material, wobei dieser Körper eine Form aufweist, die unter Berücksichtigung der Volumenänderungen bei den nachfolgenden Schritten der der Carbon-Keramik-Bremsscheibe entspricht,
- im zweiten Schritt durch Infiltration des im ersten Schritt hergestellten porösen, mit Fasern bevorzugt aus Kohlenstoff verstärkten Kohlenstoffkörpers B mit flüssigem Silicium und nachfolgende Reaktion mit dem Silicium zumindest ein Teil des Kohlenstoffs zu Siliciumcarbid umgewandelt wird, unter Bildung eines Körpers C,
wobei das carbonisierbare Material des Körpers A Verstärkungsfasern bevorzugt aus Kohlenstoff und ein plastisches Bindemittel enthält, und in einem der Indikatorfläche entsprechenden räumlich begrenzten Bereich eine Zusammensetzung aufweist, die sich von der Zusammensetzung des carbonisierbaren Materials für die übrige Reibschicht unterscheidet durch
- einen Massenanteil von mindestens 10 % an Pech in dem carbonisierbaren Material, oder
- einen Gehalt an Verstärkungsfasern, von denen ein Massenanteil von weniger als 10 % durch ein Sieb mit der Maschenweite von 0,5 mm passiert.

8. Verfahren nach Anspruch 10, **dadurch gekennzeichnet, daß** während des Fertigungsprozesses für die Bremsscheiben, die in mehrteiliger Bauweise aus einem Tragkörper und zwei Reibschichten hergestellt werden, vorgefertigte Indikatorelemente in die Preßform für die Bremsscheibe auf den Tragkörper eingelegt werden, die preßbare Masse für die Reibschicht des Körpers A eingefüllt wird und gemeinsam gepreßt und gehärtet wird.

9. Verfahren nach Anspruch 10, **dadurch gekennzeichnet, daß** während des Fertigungsprozesses für die Bremsscheiben, die in mehrteiliger Bauweise aus einem Tragkörper und zwei Reibschichten hergestellt werden, beim Befüllen der Preßform mit der die Reibschicht ergebenden Masse eine die Indikatorbereiche ergebende Masse in räumlich begrenzte Bezirke eingebracht wird.

10. Verfahren nach Anspruch 10, **dadurch gekennzeichnet, daß** während des Fertigungsprozesses für die Bremsscheiben, die in mehrteiliger Bauweise aus einem Tragkörper und zwei Reibschichten hergestellt werden, beim Befüllen der Preßform ein Platzhalter an die für den Indikator vorgesehenen Stelle eingebracht wird, nach dem Pressen der Platzhalter entfernt wird und das Indikatorelement als vorgepreßtes Element oder als Masse eingebracht wird, und anschließend erneut gepreßt wird.

11. Verwendung von Carbon-Keramik-Bremsscheiben gemäß Anspruch 1 in Kraftfahrzeugen.

## Claims

1. A carbon-ceramic brake disk C, the material of which is a ceramic material reinforced with fibers, preferably of carbon, comprising at least one frictional layer containing in the surface facing the brake linings at least one indicator surface, which has an adhesive bond with the tribological film forming on the friction surface of the carbon-ceramic brake disk that is dependent on the thermal and mechanical state of wear, wherein the tribological film no longer adheres on the indicator surface as from a state of wear that can be set by the choice of the material composition in this region.

2. The carbon-ceramic brake disk C as claimed in claim 1, wherein the indicator surface makes up at most 15 % of the friction surface of the carbon-ceramic brake disk.

3. The carbon-ceramic brake disk C as claimed in claim 1, wherein the indicator surface is at least one sector of a circle, with an included angle of at least 5°.

4. The carbon-ceramic brake disk C as claimed in claim 1, wherein the matrixes of the materials of the frictional layer and of the indicator region contain silicon carbide and silicon, the proportion by mass of silicon carbide of the matrix of the indicator region making up at most 0.9 times the proportion by mass of silicon carbide of the remaining frictional layer.

5. The carbon-ceramic brake disk C as claimed in claim 4, wherein, to limit the proportion by mass of silicon carbide, the carbonizable material that is used for producing the indicator regions has a proportion by mass of pitch of at least 10 %.

6. The carbon-ceramic brake disk C as claimed in claim 1, wherein, in the spatially delimited regions acting as an indicator surface, the reinforcing fibers of carbon contain a proportion by mass of less than 10 % of a screen fraction that passes through a screen with a mesh width of 0.5 mm.

7. A method for producing a carbon-ceramic brake disk C as claimed in claim 1, in which
- in the first step, a porous carbon body B is produced by heating a body A of a carbonizable material reinforced with fibers, preferably of carbon, this body having a form that corresponds to the carbon-ceramic brake disk while allowing for the changes in volume that occur in the subsequent steps,
- in the second step, at least part of the carbon is transformed into silicon carbide by infiltration of liquid silicon into the porous carbon body B reinforced with fibers, preferably of carbon, that was produced in the first step, and subsequent reaction with the silicon, thereby forming a body C,
the carbonizable material of the body A containing reinforcing fibers, preferably of carbon, and a plastic binder, and having in a spatially delimited region corresponding to the indicator surface a composition that differs from the composition of the carbonizable material for the remaining frictional layer by
- a proportion by mass of at least 10 % of pitch in the carbonizable material, or
- a content of reinforcing fibers of which a proportion by mass of less than 10 % passes through a screen with a mesh width of 0.5 mm.

8. The method as claimed in claim 10, wherein, during the production process for the brake disks, which are produced in a multi-part structural form from a supporting body and two frictional layers, prefabricated indicator elements are placed on the supporting body in the compression mold for the brake disk, the compressible compound for the frictional layer of the body A is introduced and they are together compressed and hardened.

9. The method as claimed in claim 10, wherein, during the production process for the brake disks, which are produced in a multi-part structural form from a supporting body and two frictional layers, a compound producing the indicator regions is introduced into spatially delimited zones when filling the compression mold with the compound producing the frictional layer.

10. The method as claimed in claim 10, wherein, during the production process for the brake disks, which are produced in a multi-part structural form from a supporting body and two frictional layers, a substitute is introduced into the place intended for the indicator when filling the compression mold, the substitute is removed after compression and the indicator element is introduced as a preformed element or as compound, and renewed compressing is subsequently performed.

11. The use of carbon-ceramic brake disks as claimed in claim 1 in motor vehicles.

## Revendications

1. Disque de frein en carbone-céramique C, dont le matériau est une matière céramique renforcée par des fibres de préférence en carbone, comprenant au moins une couche de friction, dans la surface de laquelle, tournée vers les garnitures de frein, est contenue au moins une surface d'indication, qui présente une adhérence dépendant de l'état d'usure thermique et mécanique par rapport au tribofilm réalisé sur la surface de friction du disque de frein en carbone-céramique, **caractérisé en ce que** le tribofilm n'adhère plus à la surface d'indication à partir d'un état d'usure pouvant être réglé dans cette zone en sélectionnant la composition du matériau.

2. Disque de frein en carbone-céramique C selon la revendication 1, **caractérisé en ce que** la surface d'indication mesure au maximum 15 % de la surface de friction du disque de frein en carbone-céramique.

3. Disque de frein en carbone-céramique C selon la revendication 1, **caractérisé en ce que** la surface d'indication est au moins un secteur de cercle doté d'un angle d'ouverture d'au moins 5°.

4. Disque de frein en carbone-céramique C selon la revendication 1, **caractérisé en ce que** la matrice des matériaux de la couche de friction et de la zone d'indication contient du carbure de silicium et du silicium, la part en masse de carbure de silicium de la matrice de la zone d'indication mesurant au maximum 0,9 fois la part en masse de carbure de silicium de la couche de friction restante.

5. Disque de frein en carbone-céramique C selon la revendication 4, **caractérisé en ce que**, pour limiter la part en masse de carbure de silicium, le matériau carbonisable utilisé pour produire les zones d'indication comprend une part en masse de poix d'au moins 10 %.

6. Disque de frein en carbone-céramique C selon la revendication 1, **caractérisé en ce que**, dans les zones délimitées dans l'espace agissant comme surface d'indication, les fibres de renforcement composées de carbone contiennent une part en masse inférieure à 10 % d'une fraction granulométrique, qui passe à travers un tamis présentant l'ouverture de crible de 0,5 mm.

7. Procédé de fabrication d'un disque de frein en carbone-céramique C selon la revendication 1, dans lequel
- au cours de la première étape, un corps en carbone poreux B est fabriqué en chauffant un corps A composé d'une matière carbonisable renforcée par des fibres de préférence en carbone, ce corps comprenant une forme qui, en tenant compte des variations de volume au cours des étapes suivantes, correspond au disque de frein en carbone-céramique,
- au cours de la seconde étape, par infiltration du corps en carbone B poreux fabriqué au cours de la première étape, renforcé par des fibres de préférence en carbone, avec du silicium liquide et par réaction produite avec le silicium, au moins une partie du carbone est convertie en carbure de silicium, en formant un corps C,
le matériau carbonisable du corps A contenant des fibres de renforcement de préférence en carbone et un liant plastique, et comprenant dans une zone limitée dans l'espace, correspondant à la surface d'indication, une composition qui se différencie de la composition du matériau carbonisable pour la couche de friction restante par
- une part de masse d'au moins 10 % de poix dans le matériau carbonisable, ou
- une teneur en fibres de renforcement parmi lesquelles une part en masse inférieure à 10 % passe à travers un tamis doté de l'ouverture de crible de 0,5 mm.

8. Procédé selon la revendication 10, **caractérisé en ce que** pendant le processus de fabrication pour les disques de frein, qui sont fabriqués par une méthode de construction comprenant plusieurs pièces à partir d'un corps de support et de deux couches de friction, des éléments indicateurs préfabriqués sont insérés dans la matrice de compression pour le disque de frein sur le corps de support, la masse compressible pour la couche de friction du corps A est versée et conjointement pressée et durcie.

9. Procédé selon la revendication 10, **caractérisé en ce que** pendant le processus de fabrication pour les disques de frein, qui sont fabriqués par une méthode de construction comprenant plusieurs pièces à partir d'un corps de support et de deux couches de friction, lors du remplissage de la matrice de compression avec la masse produisant la couche de friction, une masse produisant les zones d'indication est introduite dans les régions délimitées dans l'espace.

10. Procédé selon la revendication 10, **caractérisé en ce que** pendant le processus de fabrication pour les disques de frein, qui sont fabriqués par une méthode de construction comprenant plusieurs pièces à partir d'un corps de support et de deux couches de friction, lors du remplissage de la matrice de compression, un substitut est introduit à l'endroit prévu pour l'indicateur, le substitut est retiré après la compression et l'élément indicateur est introduit comme élément précompressé ou comme masse, et ensuite à nouveau compressé.

11. Utilisation des disques de frein en carbone-céramique selon la revendication 1 dans des véhicules automobiles.
